# EUROPEAN PATENT APPLICATION

(11) **EP 4 683 094 A1**
(43) Date of publication of application: **21.01.2026**
(21) Application number: 23942183.7
(22) Date of filing: 14.12.2023
(51) Int. Cl.: H01M 50/528, H01M 50/531

(54) **CURRENT-COLLECTING STRUCTURE, BATTERY AND ELECTRIC DEVICE**

(30) Priority: 20.06.2023 CN 202310732456
(71) Applicant: Contemporary Amperex Technology Co., Limited, Ningde, Fujian 352100 (CN)
(72) Inventor: CHENG, Xing, Ningde, Fujian 352100 (CN); SU, Huasheng, Ningde, Fujian 352100 (CN); WU, Yongbin, Ningde, Fujian 352100 (CN); JIN, Yikuang, Ningde, Fujian 352100 (CN); NIU, Shaojun, Ningde, Fujian 352100 (CN)
(74) Representative: Kraus & Lederer PartGmbB
(86) International application number: PCT/CN2023/138686
(87) International publication number: WO 2024/259917

(57) **Abstract**

This application provides a current collecting structure, relating to the technical field of lithium-ion battery manufacturing. The current collecting structure includes: a current collecting member, where the current collecting member includes a first connection end, a second connection end, and a bending portion, and the bending portion connects the first connection end and the second connection end; and a guide member, where the guide member is provided with a weakened portion, the bending resistance strength of the weakened portion is less than the bending resistance strength of other portions of the guide member except the weakened portion; the guide member cooperates with the current collecting member, the weakened portion corresponds in position to the bending portion, and the guide member is configured to guide the bending portion to bend at a position of the weakened portion. Since the bending resistance strength of the weakened portion is less than the bending resistance strength of other regions of the guide member, in the process of bending the current collecting member, the guide member bends at the weakened portion. Since the weakened portion corresponds in position to the bending portion, the guide member guides the current collecting member to bend at the position of the bending portion.

## Description

### CROSS-REFERENCE TO RELATED APPLICATIONS

This application claims priority to Chinese Patent Application No. 202310732456.6, filed on June 20, 2023, entitled "CURRENT COLLECTING STRUCTURE, BATTERY, AND ELECTRIC DEVICE", which is incorporated herein by reference in its entirety.

### TECHNICAL FIELD

This application relates to the technical field of lithium-ion battery manufacturing, and in particular, to a current collecting structure, a battery, and an electric device.

### BACKGROUND

Because rechargeable batteries have advantages such as high energy density, high power density, many cycles of use, and long storage time, they have been widely used in electric vehicles, mobile devices, and various electric tools.

Currently, for batteries, in the process of using a current collecting structure to connect tabs and electrode terminals of the battery, it is usually necessary to perform bending treatment on the current collecting structure, so the current collecting structure has restrictions on the thickness and hardness. In the bending process of the current collecting structure, the problem of crease offset is prone to occur, resulting in difficulty in installing the electrode assembly into the outer shell of the battery. Forced installation may damage the current collecting structure, tabs, and electrode terminals, compromising battery performance.

### SUMMARY

Embodiments of this application provide a current collecting structure, a battery, and an electric device, which can reduce the offset of a bending axis of a bending portion of the current collecting structure during the bending process and improve the service life of the battery.

According to a first aspect, this application provides a current collecting structure, including: a current collecting member, where the current collecting member includes a first connection end, a second connection end, and a bending portion, and the bending portion connects the first connection end and the second connection end; and a guide member, where the guide member is provided with a weakened portion, the bending resistance strength of the weakened portion is less than the bending resistance strength of other portions of the guide member except the weakened portion; the guide member cooperates with the current collecting member, the weakened portion corresponds in position to the bending portion, and the guide member is configured to guide the bending portion to bend at a position of the weakened portion.

In embodiments of this application, the current collecting member has a first connection end, a bending portion, and a second connection end distributed in sequence; the guide member has a weakened portion; before bending the current collecting member, the guide member and the current collecting member cooperate so that the guide member and the current collecting member are connected or abut against each other; and the weakened portion corresponds in position to the bending portion. Since the bending resistance strength of the weakened portion is less than the bending resistance strength of other regions of the guide member, in the process of bending the current collecting member, the guide member bends at the weakened portion. Since the weakened portion corresponds in position to the bending portion, the guide member guides the current collecting member to bend at the position of the bending portion, thereby effectively reducing the offset amount and tilt amount of the bending axis of the bending portion occurring during the bending process, thereby enabling the current collecting member to be smoothly installed into the shell of the battery cell. This improves the structural stability of the current collecting member and improves the service life of the battery.

In some implementations, the guide member is disposed on at least one side of the current collecting member. One guide member may be provided, and in this case, the guide member may be disposed on one side of the current collecting member. Alternatively, two or more guide members may be provided, and in this case, some of the guide members may be disposed on one side of the current collecting member, and other guide members may be disposed on the other side of the current collecting member. In the case where the guide member is disposed on one side of the current collecting member, the guide member may be disposed on the side of the current collecting member that will form the inner side after bending. During the bending process of the current collecting member, the guide member located on the inner side of the current collecting member will first undergo larger deformation, thereby better guiding the bending axis of the current collecting member to remain at the bending portion. In the case where the guide member is disposed on both sides of the current collecting member, the guide member can guide the position of the bending axis during the bending process of the current collecting member from both sides of the current collecting member, and can also better guide the bending axis of the current collecting member to remain at the bending portion.

In some implementations, the current collecting member includes at least two current collecting layers, where at least two of the current collecting layers are stacked along a thickness direction of the current collecting member, and at least one of the current collecting layers is provided with the guide member. The current collecting member is formed by at least two current collecting layers, reducing the difficulty of bending the current collecting member while ensuring the overcurrent area, facilitating bending of the current collecting member. The guide member may be disposed on some of the current collecting layers, in other words, each of the some current collecting layers is provided with a guide member; alternatively, the guide member may be disposed on all of the current collecting layers, in other words, each of all the current collecting layers is provided with a guide member. Utilizing the guide member enables the easily bendable current collecting member to always keep the bending axis at the bending portion during the bending process.

In some implementations, the guide member is disposed between at least one pair of adjacent two of the current collecting layers. Disposing at least a portion of the guide member between adjacent two current collecting layers can make the spacing between the current collecting layers and the guide members smaller. This improves the guiding effect of the guide member, thereby better utilizing the guide member to enable the easily bendable current collecting member to always keep the bending axis at the bending portion during the bending process.

In some implementations, the current collecting member is a conductive structure, and the guide member is an insulating structure. The current collecting member needs to allow current to pass through, and the current collecting member needs to be a conductive structure made of conductive material. Since a weakened portion needs to be formed on the guide member, in the case where the guide member is a conductive structure, an overcurrent area at the weakened portion is relatively small, and the resistance at the weakened portion is relatively large. This results in a relatively high temperature at the weakened portion during operation, and even the weakened portion may thermally melt and break, causing high safety hazards. In the case where the guide member is an insulating structure, the above situation can be effectively avoided.

In some implementations, the material of the guide member includes at least one of polypropylene PP, polyethylene terephthalate PET, polyethylene PE, polyvinyl chloride PVC, polytetrafluoroethylene PTFE, ethylene-vinyl acetate copolymer EVA, and rubber. The guide member made of the above materials not only has good insulation, but also has high toughness, and is unlikely to break during the bending process. This can ensure that the guide member can guide the position of the bending axis of the current collecting member throughout the bending process of the current collecting member. Since the density of the above materials is low, the guide member made of the above materials can effectively reduce the weight of the entire structure.

In some implementations, the current collecting member and the guide member are both conductive structures. The current collecting member needs to allow current to pass through, and the current collecting member needs to be a conductive structure made of conductive material. In the case where the guide member is a conductive structure made of conductive material, both the guide member and the current collecting member can allow current to pass through, and in this case, the guide member can share the overcurrent pressure for the current collecting member.

In some implementations, the guide member is attached to the current collecting member, where at least a portion of the guide member is bonded to the current collecting member, and/or at least a portion of the guide member is welded to the current collecting member. Utilizing bonding or welding, a larger-area surface of the guide member can be fixedly connected to a side surface of the current collecting member. In this case, the two are firmly connected, and during the bending process of the current collecting member, the guide member is unlikely to slip relative to the current collecting member. Therefore, the guide member is unlikely to guide the bending axis of the current collecting member outside the bending portion.

In some implementations, the guide member abuts against the current collecting member; where at least a portion of the guide member and at least a portion of the current collecting member are both configured to abut against each other under the action of external force. In the case where the guide member and the current collecting member abut against each other, a larger-area surface of the guide member is attached to a side surface of the current collecting member. This utilizes friction force to keep the positions of the two fixed, and during the bending process of the current collecting member, the guide member is unlikely to slip relative to the current collecting member. Therefore, the guide member is unlikely to guide the bending axis of the current collecting member outside the bending portion.

In some implementations, at least a portion of the weakened portion is a thinned region; the thickness of at least a portion of the thinned region is less than the thickness of other portions of the weakened portion except the thinned region, or at least a portion of the thinned region is a hollow structure. By forming part or all of the region of the weakened portion as a thinned region, the bending resistance strength of the weakened portion can be effectively reduced. Specifically, the thinned region may be a region with reduced thickness, or may be a hollow region. In both cases above, the bending resistance strength of the thinned region can be lower than the bending resistance strength of other regions of the guide member.

In some implementations, at least a portion of the thinned region is disposed at at least one end of the weakened portion in a first direction, the first direction intersecting with a connection direction of the first connection end and the second connection end.

In the case where the thinned region is disposed at both ends in the first direction, the thinned region can be used to limit the positions of both ends of a crease, thereby facilitating control of a deflection angle of the crease. Specifically, in the case where the thinned region is only located in a middle region of the crease, both ends of the crease are prone to tilt toward an outward direction from the weakened portion. This causes an excessive deflection angle of the crease, resulting in only the middle portion of the crease remaining within the weakened portion, while both ends of the crease being outside the weakened portion. Specifically, one end of the crease may be located on one side of the weakened portion, and the other end of the crease may be located on the other side of the weakened portion opposite to the one side. In the case where the thinned region is disposed at both ends in the first direction, the positions of both ends of the crease are determined within the weakened portion, and the middle region of the crease is also necessarily within the weakened portion, thereby effectively controlling the deflection angle of the crease, ensuring that the entire crease is within the weakened portion.

In some implementations, at least a portion of the thinned region is disposed in the middle of the weakened portion in a first direction, the first direction intersecting with a connection direction of the first connection end and the second connection end.

Disposing the thinned region in the middle of the weakened portion in the first direction is conducive to making the weakened portion have smaller bending resistance strength, thereby facilitating easier bending and ensuring the crease remains within the weakened portion. Specifically, compared to two ends of the weakened portion in the first direction, the middle of the weakened portion in the first direction possesses a greater area, and therefore the area of the thinned region can be larger, more effectively reducing and controlling the bending resistance strength of the weakened portion.

In some implementations, the guide member is an integrally formed structure.

The guide member being an integrally formed structure is not only convenient to manufacture, but also ensures the structural strength of the guide member, making the guide member less prone to breakage during the bending process.

According to a second aspect, a battery cell is provided, including: an electrode terminal; an electrode assembly; and the above current collecting structure, where one end of the current collecting structure is connected to the electrode terminal, and the other end of the current collecting structure is connected to the electrode assembly.

Using the above current collecting structure, the guide member guides the current collecting member to bend at the position of the bending portion, thereby effectively reducing the offset amount and tilt amount of the bending axis of the bending portion occurring during the bending process, thereby enabling the current collecting member to be smoothly installed into the shell of the battery cell, improving the structural stability of the current collecting member, and improving the service life of the battery.

In some implementations, the battery cell is a cylindrical battery or a prismatic battery.

Both cylindrical batteries and prismatic batteries can adapt to the above current collecting member, enabling the current collecting member to be smoothly installed into the shell of the battery cell.

According to a third aspect, a battery is provided, including the above battery cell.

Since the battery includes the above battery cell, and the above battery cell has a long service life, the battery can avoid the occurrence of reduced life due to crease offset in the bending of the current collecting member.

According to a fourth aspect, an electric device is provided, including the above battery.

Since the electric device includes the above battery, and the battery includes battery cells with a long service life, the electric device can avoid the occurrence of reduced life due to crease offset in the bending of the current collecting member.

The above description is only an overview of the technical solutions of this application. To enable clearer understanding of the technical means in this application, implementation may be made with reference to the content of the specification. Furthermore, in order to make the above and other purposes, features, and advantages of this application more obvious and understandable, the specific implementations of this application are specifically cited below.

### BRIEF DESCRIPTION OF DRAWINGS

To more clearly illustrate the technical solutions of the embodiments of this application, the drawings needed in the embodiments will be briefly introduced below. It should be understood that the following drawings show only some embodiments of this application and should not be regarded as limiting the scope. For those of ordinary skill in the art, other related drawings can also be obtained from these drawings without creative effort.
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell according to an embodiment of this application;
FIG. 4 is an exploded view of an end cap assembly according to an embodiment of this application;
FIG. 5 is a schematic structural diagram of a current collecting structure according to an embodiment of this application;
FIG. 6 is a schematic structural diagram of a current collecting member according to an embodiment of this application;
FIG. 7 is a schematic structural diagram of a guide member according to an embodiment of this application;
FIG. 8 is a schematic structural diagram of another guide member according to an embodiment of this application;
FIG. 9 is a side view of a current collecting structure according to an embodiment of this application;
FIG. 10 is a side view of another current collecting structure according to an embodiment of this application; and
FIG. 11 is a side view of another current collecting structure according to an embodiment of this application.

### Reference signs:

1: electric device; 10: battery; 20: battery cell; 30: controller; 40: motor; 11: housing; 111: first housing part; 112: second housing part; 210: shell; 220: electrode assembly; 230: end cap assembly; 2301: negative end cap assembly; 2302: positive end cap assembly; 231: riveting block; 232: second insulating member; 233: end cap; 234: first insulating member; 235: sealing ring; 236: current collecting structure; 2361: current collecting member; 2362: tab connection end; 2363: guide member; 2364: weakened portion; 2365: thinned region; 2366: first connection end; 2367: second connection end; 2368: bending portion; and 237: electrode terminal.

### DESCRIPTION OF EMBODIMENTS

Embodiments of the technical solutions of this application are described in detail below in conjunction with the drawings. The following embodiments are only used to more clearly illustrate the technical solutions of this application, and thus serve only as examples, and cannot be used to limit the protection scope of this application.

Unless otherwise defined, all technical and scientific terms used herein have the same meaning as commonly understood by those skilled in the technical field of this application; the terms used herein are only for the purpose of describing specific embodiments, and are not intended to limit this application; the terms "including" and "having" in the description and claims of this application and the above description of the drawings, as well as any variations thereof, are intended to cover non-exclusive inclusions.

In the description of the embodiments of this application, technical terms such as "first" and "second" are only used to distinguish different objects, and cannot be understood as indicating or implying relative importance or implicitly indicating the number, specific order, or primary-secondary relationship of the indicated technical features. In the description of the embodiments of this application, "multiple" means two or more, unless otherwise explicitly and specifically defined.

Reference herein to "embodiment" means that a particular feature, structure, or characteristic described in connection with the embodiment may be included in at least one embodiment of this application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein may be combined with other embodiments.

In the description of the embodiments of this application, the term "and/or" is merely a description of the association relationship of associated objects, indicating that three relationships may exist, for example, A and/or B may indicate: A exists alone, A and B exist simultaneously, and B exists alone. In addition, the character "/" herein generally indicates that the associated objects before and after are in an "or" relationship.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, the orientations or positional relationships indicated by technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", and "circumferential" refer to orientations or positional relationships based on those shown in the accompanying drawings. These terms are used solely to facilitate description of the embodiments of this application and simplify explanation, not to indicate or imply that the referenced apparatus or elements must have specific orientations or be constructed and operated in specific orientations. Therefore, these terms should not be construed as limiting the embodiments of this application.

In the description of the embodiments of this application, unless explicitly specified and limited otherwise, technical terms such as "installation," "connection," "linkage," "fixation" should be understood broadly, for example, as fixed connections, detachable connections, or integral formations; direct connections, indirect connections through intermediaries, or internal communication or interaction between two elements. Those of ordinary skill in the art can understand the specific meanings of these terms in the embodiments of this application based on specific circumstances.

A battery generally refers to a single physical module including one or more battery cells to provide higher voltage and capacity. For example, the battery may include a battery module or a battery pack. Generally, the battery further includes a housing for encapsulating one or more battery cells. The housing can prevent liquids or other foreign objects from affecting the charging or discharging of the battery cells.

In some embodiments, the battery cell may include a lithium-ion battery, a lithium-sulfur battery, a sodium-lithium-ion battery, a sodium-ion battery, or a magnesium-ion battery, which is not limited in the embodiments of this application. Generally, the battery cell may also be referred to as a cell. The battery cell may be cylindrical, flat, rectangular, or other regular or irregular shapes. The technical solutions of the embodiments of this application can be applied to battery cells of any shape, especially cylindrical battery cells.

The battery cell includes an electrode assembly and an electrolyte, the electrode assembly consisting of a positive electrode plate, a negative electrode plate, and a separator. The battery cell mainly relies on metal ions moving between the positive electrode plate and the negative electrode plate to work. The positive electrode plate includes a positive electrode current collector and a positive electrode active material layer, the positive electrode active material layer is applied to the surface of the positive electrode current collector, the current collector not coated with the positive electrode active material layer protrudes from the current collector coated with the positive electrode active material layer, and the current collector not coated with the positive electrode active material layer serves as a positive tab. Taking a lithium-ion battery as an example, the material of the positive electrode current collector may be aluminum, and the positive electrode active material may be lithium cobaltate, lithium iron phosphate, ternary lithium, or lithium manganate, or the like. The negative electrode plate includes a negative electrode current collector and a negative electrode active material layer, the negative electrode active material layer is applied to the surface of the negative electrode current collector, the current collector not coated with the negative electrode active material layer protrudes from the current collector coated with the negative electrode active material layer, and the current collector not coated with the negative electrode active material layer serves as a negative tab. The material of the negative electrode current collector may be copper, and the negative electrode active material may be carbon, silicon, or the like. To ensure that large current passes without fusing, the positive tabs are provided in multiple layers and stacked together, and the negative tabs are also provided in multiple layers and stacked together. The material of the separator may be polypropylene (polypropylene, PP) or polyethylene (polyethylene, PE), or the like. In addition, the electrode assembly may be a wound structure or a stacked structure, and the embodiments of this application are not limited thereto.

In some embodiments, in addition to the electrode assembly, the battery cell further includes an end cap, the end cap is provided with an electrode terminal of the battery cell, and an insulating member is also provided between the end cap and the electrode terminal to ensure insulation between the end cap and the electrode terminal. Electrical connection is achieved between the electrode terminal and the tab of the electrode assembly through a current collecting structure.

Currently, in the installation process of the battery, a current collecting structure is usually used to connect the tab of the battery to the electrode terminal. Since it is usually necessary to bend the current collecting structure during use, and to facilitate the bending of the current collecting structure, the bending portion usually cannot be made too thick, and additionally, to ensure the overcurrent area of the current collecting structure, the bending portion cannot be set too thin. Therefore, the current collecting structure is usually set as a multi-layer thin sheet structure. When the bending resistance strength of the current collecting structure is low, during the bending process, the problems of crease offset and tilt are prone to occur. Crease offset may lead to difficulty in installing the electrode assembly into the outer shell of the battery. Forced installation may damage the current collecting structure, the tab, and the electrode terminal, compromising their service life and ultimately affecting the performance of the battery. Crease tilt may lead to excessive deflection angle of the electrode terminal, affecting the subsequent production steps, such as welding.

In view of this, embodiments of this application provide a current collecting structure, including: a current collecting member, where the current collecting member includes a first connection end, a second connection end, and a bending portion, and the bending portion connects the first connection end and the second connection end; and a guide member, where the guide member is provided with a weakened portion, the bending resistance strength of the weakened portion is less than the bending resistance strength of other portions of the guide member except the weakened portion; the guide member cooperates with the current collecting member, the weakened portion corresponds in position to the bending portion, and the guide member is configured to guide the bending portion to bend at the position of the weakened portion. The current collecting member has a first connection end, a bending portion, and a second connection end distributed in sequence; the guide member has a weakened portion; before bending the current collecting member, the guide member and the current collecting member cooperate so that the guide member and the current collecting member are connected or abut against each other; and the weakened portion corresponds in position to the bending portion. Since the bending resistance strength of the weakened portion is less than the bending resistance strength of other regions of the guide member, in the process of bending the current collecting member, the guide member bends at the weakened portion. Since the weakened portion corresponds in position to the bending portion, the guide member guides the current collecting member to bend at the position of the bending portion, thereby effectively reducing the offset amount and tilt amount of the bending axis of the bending portion occurring during the bending process, thereby enabling the current collecting member to be smoothly installed into the shell of the battery cell. This improves the structural stability of the current collecting member, improves the service life of the battery, reduces the deflection angle of the electrode terminal, and reduces the processing difficulty of subsequent production steps, such as welding.

The technical solutions described in the embodiments of this application are applicable to various electric devices using batteries.

The electric device may be vehicles, mobile phones, portable devices, notebook computers, ships, spacecraft, electric toys, electric tools, and the like. Vehicles may be fuel vehicles, gas vehicles, or new energy vehicles, new energy vehicles may be battery electric vehicles, hybrid electric vehicles, extended-range electric vehicles, or the like. Spacecraft include airplanes, rockets, space shuttles, spaceships, and the like; electric toys include fixed or mobile electric toys, such as game consoles, electric car toys, electric ship toys, and electric airplane toys; electric tools include metal cutting electric tools, grinding electric tools, assembly electric tools, and railway electric tools, such as electric drills, electric grinders, electric wrenches, electric screwdrivers, electric hammers, impact drills, concrete vibrators, and electric planers. The embodiments of this application do not impose special restrictions on the above electric devices.

The following embodiments are described with the electric device as a vehicle for convenience of explanation.

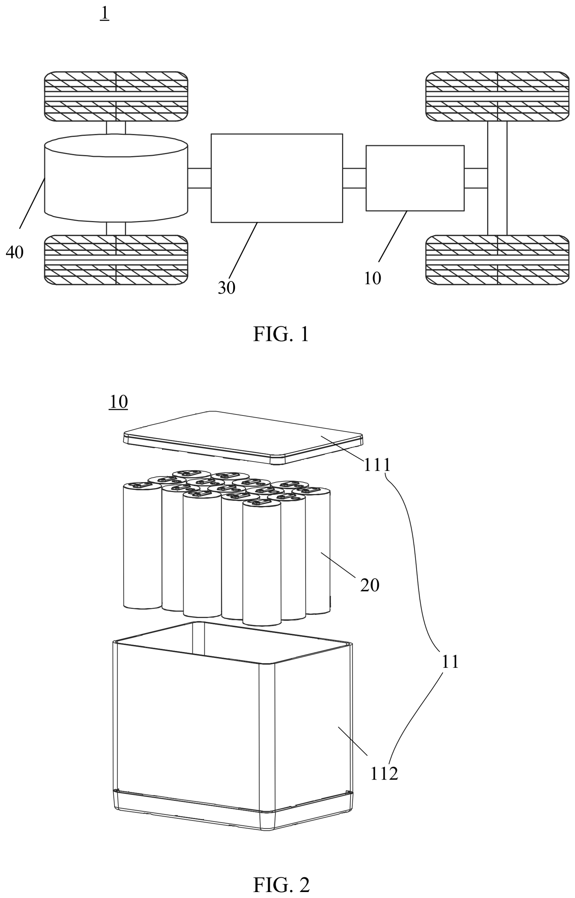

For example, FIG. 1 is a schematic structural diagram of a vehicle 1 according to an embodiment of this application. The vehicle 1 may be a fuel vehicle, a gas vehicle, or a new energy vehicle. The new energy vehicle may be a pure electric vehicle, a hybrid vehicle, an extended-range vehicle, or the like. The interior of the vehicle 1 may be provided with a motor 40, a controller 30, and a battery 10, and the controller 30 is used to control the battery 10 to supply power to the motor 40. For example, the battery 10 may be disposed at the bottom or front or rear of the vehicle 1. The battery 10 may be used for power supply of the vehicle 1. For example, the battery 10 may serve as an operating power source of the vehicle 1, for the circuit system of the vehicle 1, for example, for the working power demand during starting, navigation, and running of the vehicle 1. In another embodiment of this application, the battery 10 may not only serve as an operating power source of the vehicle 1, but also as a driving power source of the vehicle 1, replacing or partially replacing fuel or natural gas to provide driving power for the vehicle 1.

For example, FIG. 2 is a schematic structural diagram of a battery 10 according to an embodiment of this application. The battery 10 may include multiple battery cells 20. In addition to the battery cells 20, the battery 10 may further include a housing 11, where the interior of the housing 11 is a hollow structure, and multiple battery cells 20 may be accommodated in the housing 11. As shown in FIG. 2, the housing 11 may include two parts, referred to herein as a first housing part 111 and a second housing part 112, respectively, where the first housing part 111 and the second housing part 112 are interlocked. The shapes of the first housing part 111 and the second housing part 112 may be determined according to the combined shape of the multiple battery cells 20, and at least one of the first housing part 111 and the second housing part 112 has an opening. For example, as shown in FIG. 2, only one of the first housing part 111 and the second housing part 112 is a hollow rectangular cuboid with an opening, and the other is plate-shaped to cover the opening. Here, taking the second housing part 112 as a hollow rectangular cuboid with only one open side and the first housing part 111 as plate-shaped as an example, the first housing part 111 covers the opening of the second housing part 112 to form a housing 11 with a closed chamber. The chamber can be used to accommodate multiple battery cells 20. The multiple battery cells 20 are first connected in parallel, series, or hybrid configurations, and then are placed in the housing 11 formed by interlocking the first housing part 111 and the second housing part 112.

For another example, different from that shown in FIG. 2, the first housing part 111 and the second housing part 112 may both be hollow rectangular cuboids, each with only one open side; the opening of the first housing part 111 and the opening of the second housing part 112 are oppositely disposed; and the first housing part 111 and the second housing part 112 are interlocked to form a housing with a closed chamber. Multiple battery cells 20 are combined in parallel, series, or mixed connection, and then are placed in the housing 11 formed by interlocking the first housing part 111 and the second housing part 112.

In some implementations, the battery 10 may further include other structures, which are not repeated here. For example, the battery 10 may further include a busbar component (not shown in the figure), the busbar component is used to achieve electrical connection between multiple battery cells 20, such as parallel, series, or mixed connection. Specifically, the busbar component may be used to connect electrode terminals of the battery cells 20 to achieve electrical connection between the battery cells 20. In some embodiments, the busbar component may be fixed to the electrode terminals of the battery cells 20 by welding. The electrical energy of the multiple battery cells 20 may be further led out of the housing through a conductive structure. In some embodiments, the conductive structure may also be the busbar component.

To meet different power usage requirements, multiple battery cells 20 may be included, and the multiple battery cells may be connected in series, parallel, or hybrid configurations, where hybrid configuration refers to a mixture of series and parallel configurations. The battery 10 may also be referred to as a battery pack. In some embodiments, multiple battery cells may first be connected in series, parallel, or hybrid configurations to form a battery module, and then multiple battery modules are connected in series, parallel, or hybrid configurations to form the battery 10. That is, multiple battery cells may directly form the battery 10, or may first form battery modules, and then the battery modules form the battery 10.

For convenience of explanation, the following takes the cylindrical battery cell 20 shown in FIG. 2 as an example to illustrate the technical solutions of this application. However, it should be understood that the battery cell 20 of the embodiments of this application may be a square-shell battery cell, a blade-type battery cell, or the like, in addition to a cylindrical battery cell.

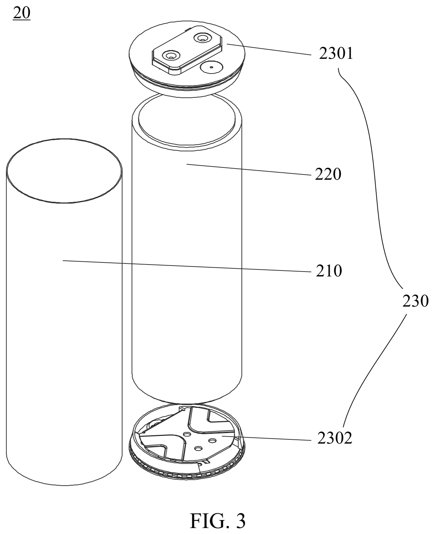

FIG. 3 is a schematic structural diagram of a battery cell according to an embodiment of this application. As shown in FIG. 3, the battery cell 20 includes a shell 210, an electrode assembly 220, and an end cap assembly 230. The shell 210 and the end cap assembly 230 form an outer shell or a battery box. The shell 210 is made of metal, such as aluminum. The shape of the shell 210 is determined according to the combined shape of one or more electrode assemblies 220. For example, the shell 210 may be a hollow cylinder as shown in FIG. 3.

The shell 210 has an opening, the electrode assembly 220 is accommodated in the shell 210, the end cap assembly 230 is used to cover the opening, so as to enclose the electrode assembly 220 within the shell 210. Through the shell 210 and the end cap assembly 230, the accommodation and protection of the electrode assembly 220 and other components are achieved. The shell 210 is filled with electrolyte, such as electrolyte solution.

As shown in FIG. 3, the end cap assembly 230 includes a negative end cap assembly 2301 and a positive end cap assembly 2302. The negative end cap assembly 2301 and the positive end cap assembly 2302 respectively cover the openings of the shell 210 at both ends of the shell 210, enclosing the electrode assembly 220 within the shell 210. The negative end cap assembly 2301 is provided with a negative electrode terminal, and the positive end cap assembly 2302 is provided with a positive electrode terminal. The positive electrode terminal is connected to a positive tab of the electrode assembly 220, and the negative electrode terminal is connected to a negative tab of the electrode assembly 220. The positive electrode terminal and the negative electrode terminal can be in any quantity. For example, the battery cell 20 may have two positive electrode terminals and two negative electrode terminals, the two positive electrode terminals are disposed on the positive end cap assembly 2302, and the two negative electrode terminals are disposed on the negative end cap assembly 2301. The positive end cap assembly 2302 and the negative end cap assembly 2301 have identical structures. Below, the described end cap assembly 230 may be any one of the positive end cap assembly 2302 and the negative end cap assembly 2301.

In the battery cell 20, according to actual usage requirements, a single or multiple electrode assemblies 220 may be provided. For example, as shown in FIG. 3, one electrode assembly 220 is provided in the battery cell 20.

In some implementations, as shown in FIG. 3, when the battery cell 20 is a cylinder, the value range of the diameter of the cylinder may be [10mm, 100mm]. Exemplarily, the diameter of the battery cell 20 may be set to 10mm, 20mm, 30mm, 40mm, 50mm, 60mm, 70mm, 80mm, 90mm, or 100mm, or may fall within a range defined by any two of the above values.

In some implementations, as shown in FIG. 3, a value range of the length of the battery cell 20 may be [20mm, 1000mm]. Exemplarily, the length of the battery cell 20 may be set to 20mm, 30mm, 40mm, 50mm, 60mm, 70mm, 80mm, 90mm, 100mm, 200mm, 300mm, 400mm, 500mm, 600mm, 700mm, 800mm, 900mm, or 1000mm, or may fall within a range defined by any two of the above values.

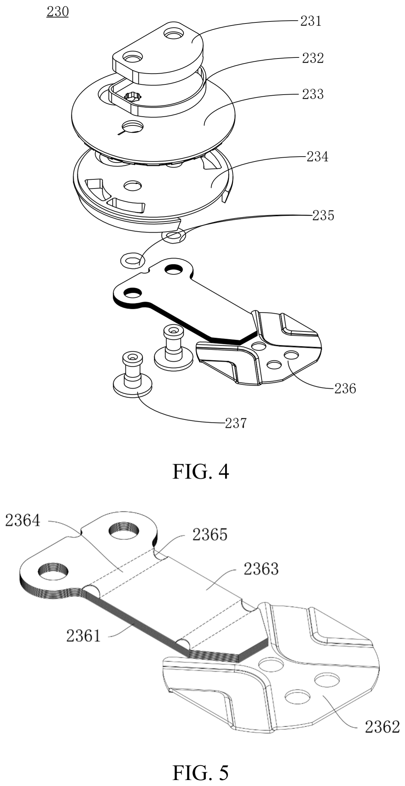

FIG. 4 is an exploded view of an end cap assembly 230 according to an embodiment of this application. As shown in FIG. 4, the end cap assembly 230 includes an end cap 233, an electrode terminal 237, and a tab of the electrode assembly 220.

In some implementations, as shown in FIG. 4, a first insulating member 234 is disposed between the end cap 233 and the electrode terminal 237, where the first insulating member 234 may also be referred to as lower plastic, configured to achieve insulation between the electrode terminal 237 and the end cap 233.

In some implementations, as shown in FIG. 4, the end cap assembly 230 in the battery cell 20 further includes a riveting block 231, where the riveting block 231 is configured to fix the electrode terminal 237 protruding on the end cap 233.

In some implementations, as shown in FIG. 4, the end cap assembly 230 in the battery cell 20 further includes a second insulating member 232, where the second insulating member 232 may also be referred to as upper plastic and is configured to achieve insulation between the end cap 233 and the riveting block 231.

In some implementations, as shown in FIG. 4, the end cap assembly 230 in the battery cell 20 further includes a sealing ring 235 configured to form a seal between the electrode terminal 237 and the end cap 233. Exemplarily, the sealing ring 235 may be set as annular and sleeved over on the exterior of the electrode terminal 237.

It should be understood that, in some implementations, the end cap assembly 230 in the battery cell 20 in the embodiments of this application further includes a pressure relief structure, where the pressure relief structure is configured to actuate to release the internal pressure or temperature of the battery cell 20 when the internal pressure or temperature of the battery cell 20 reaches a threshold. The pressure relief structure may have various possible structures. For example, the pressure relief structure may include a temperature-sensitive pressure relief structure, where the temperature-sensitive pressure relief structure is configured to melt when the temperature inside the battery cell 20 provided with the pressure relief structure reaches a threshold; and/or the pressure relief structure may include a pressure-sensitive pressure relief structure, where the pressure-sensitive pressure relief structure is configured to rupture when the air pressure inside the battery cell 20 provided with the pressure relief structure reaches a threshold.

FIG. 5 is a schematic structural diagram of a current collecting structure 236 according to an embodiment of this application.

It should be understood that, in the embodiments of this application, for convenience of description, three directions are defined here. As shown in FIG. 5, a first direction Z is a thickness direction of the current collecting structure 236, where the first direction Z is perpendicular to a second direction X and a direction Y; the second direction X is a length direction of the current collecting structure 236; and the third direction Y is a width direction of the current collecting structure 236, where the third direction is perpendicular to the second direction.

In the embodiments of this application, as shown in FIG. 5, the current collecting structure 236 includes a current collecting member 2361 and a guide member 2363.

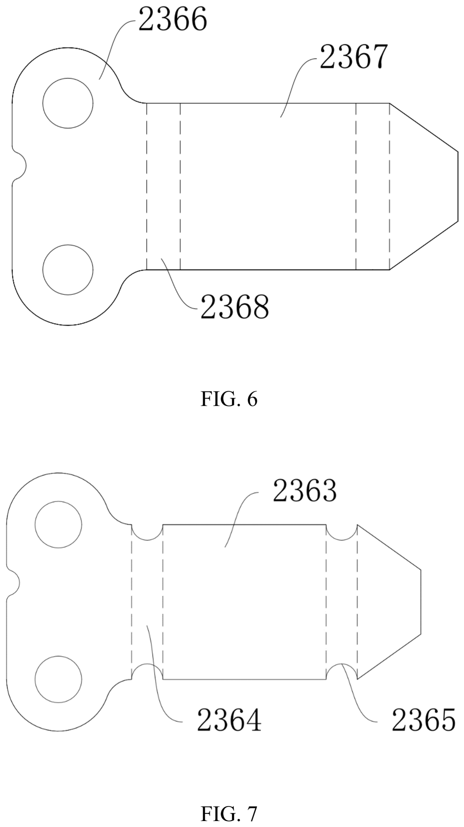

FIG. 6 is a schematic structural diagram of a current collecting member 2361 according to an embodiment of this application.

As shown in FIG. 6, the current collecting member 2361 includes a first connection end 2366, a second connection end 2367, and a bending portion 2368, where the first connection end 2366 and the second connection end 2367 are respectively connected to opposite sides of the bending portion 2368, meaning that the first connection end 2366, the bending portion 2368, and the second connection end 2367 are distributed in sequence. Specifically, the first connection end 2366 may be an end away from the tab connection end 2362, and the second connection end 2367 may be an end close to the tab connection end 2362.

FIG. 7 is a schematic structural diagram of a guide member 2363 according to an embodiment of this application.

As shown in FIG. 7, the guide member 2363 is provided with a weakened portion 2364, where the bending resistance strength of the weakened portion 2364 is less than the bending resistance strength of other portions of the guide member 2363 except the weakened portion 2364, meaning that the weakened portion 2364 is a region with the smallest bending resistance strength in the entire guide member 2363; and the guide member 2363 cooperates with the current collecting member 2361. In the case where the guide member 2363 cooperates with the current collecting member 2361, the position of the weakened portion 2364 corresponds to the position of the bending portion 2368, and the guide member 2363 is configured to guide the bending portion 2368 to bend at the position of the weakened portion 2364.

The first connection end 2366 is a part of the current collecting member 2361 on one side of the crease after bending, and the second connection end 2367 is a portion of the current collecting member 2361 on the other side of the crease after bending. Generally, the bending angle of the current collecting member 2361 is large, and the bending angle is generally between 170° and 180°. After the current collecting member 2361 is bent, the first connection end 2366 and the second connection end 2367 are usually stacked, meaning that the first connection end 2366 and the second connection end 2367 are close to each other and oppositely disposed. Certainly, in some special cases, when the bending angle of the current collecting member 2361 is small, the first connection end 2366 and the second connection end 2367 may alternatively be spaced apart by a large distance. In this application, the bending angle of the current collecting member 2361 is not limited.

The bending portion 2368 is a region where the crease is expected to be located after the current collecting member 2361 is bent. If the crease is in the bending portion 2368, it means that the bent current collecting member 2361 neither causes difficulty in installing the electrode assembly into the outer shell of the battery, nor causes excessive deflection angle of the electrode terminal 237. To ensure the accuracy of the position where the crease is located, the bending portion 2368 should not be set too wide. Generally, the width of the bending portion 2368 should not be greater than 5mm, and preferably, the width of the bending portion 2368 should not be greater than 3mm. Certainly, in some special cases, for example, when the current collecting member 2361 is small such that even a large crease offset does not cause difficulty in installing the electrode assembly into the outer shell of the battery, the width of the bending portion 2368 can be appropriately increased. For example, the width can be increased to 7mm or 10mm or 13mm. In this application, the width of the bending portion 2368 is not limited. Generally, the current collecting member 2361 bends in a length direction, and in this case, the length of the bending portion 2368 should be equal to the width of the current collecting member 2361 at the position of the bending portion 2368. Certainly, in some special cases, the current collecting member 2361 may alternatively bend in a width direction, and in this case, the length of the bending portion 2368 should be equal to the length of the current collecting member 2361 at the position of the bending portion 2368. In this application, the length of the bending portion 2368 is not limited.

The weakened portion 2364 is a region with smaller bending resistance strength of the guide member 2363. Generally, in order to correspond to the current collecting member 2361, the bending resistance strength of regions adjacent to both sides of the weakened portion 2364 should be greater than that of the weakened portion 2364, in other words, the weakened portion 2364 should be in the middle region of the guide member 2363, to be specific, a region adjacent to one side of the weakened portion 2364 is a structure with a bending resistance strength greater than that of the weakened portion 2364, and a region adjacent to the other side of the weakened portion 2364 is also a structure with a bending resistance strength greater than that of the weakened portion 2364. In this case, cooperation between the guide member 2363 the current collecting member 2361 is achieved by only making the first connection end 2366 of the current collecting member 2361 cooperate with a portion of the guide member 2363 on one side of the weakened portion 2364, making the second connection end 2367 of the current collecting member 2361 cooperate with a portion of the guide member 2363 on the other side of the weakened portion 2364, and making the bending portion 2368 of the current collecting member 2361 cooperate with the weakened portion 2364 of the guide member 2363. Certainly, in some special cases, the weakened portion 2364 may alternatively be at one end of the guide member 2363, and in this case, one side of the weakened portion 2364 adjoins a structure with a bending resistance strength greater than that of the weakened portion 2364, and the other side of the weakened portion 2364 adjoins no structure. In this case, cooperation between the guide member 2363 and the current collecting member 2361 is achieved by only making the first connection end 2366 of the current collecting member 2361 cooperate with the portion of the guide member 2363 on one side of the weakened portion 2364, and making the bending portion 2368 of the current collecting member 2361 cooperate with the weakened portion 2364 of the guide member 2363.

The cooperation between the guide member 2363 and the current collecting member 2361 is the guide member 2363 being attached to the current collecting member 2361. Specifically, the guide member 2363 may be attached to the surface of the current collecting member 2361 or may be attached to the interior of the current collecting member 2361. In the case where the weakened portion 2364 is in the middle region of the guide member 2363, a portion of the guide member 2363 adjoining one side of the weakened portion 2364 is attached to the first connection end 2366 of the current collecting member 2361, the weakened portion 2364 of the guide member 2363 is attached to the bending portion 2368 of the current collecting member 2361, and a portion of the guide member 2363 adjoining the other side of the weakened portion 2364 is attached to the second connection end 2367 of the current collecting member 2361. In the case where the weakened portion 2364 is at one end of the guide member 2363, a portion of the guide member 2363 adjoining one side of the weakened portion 2364 is attached to the first connection end 2366 of the current collecting member 2361, and the weakened portion 2364 of the guide member 2363 is attached to the bending portion 2368 of the current collecting member 2361. In summary, the weakened portion 2364 of the guide member 2363 needs to cooperate with the bending portion 2368 of the current collecting member 2361, to be specific, the weakened portion 2364 and the bending portion 2368 are stacked, and a projection of the weakened portion 2364 in a stacking direction at least partially falls into the bending portion 2368, meaning that the weakened portion 2364 and the bending portion 2368 at least partially overlap in the stacking direction. Preferably, to ensure the guiding effect of the guide member 2363, the projection of the weakened portion 2364 of the guide member 2363 in the stacking direction can all fall into the bending portion 2368, to ensure that after the current collecting member 2361 is bent, the crease is all within the range of the bending portion 2368.

In embodiments of this application, the current collecting member 2361 has a first connection end 2366, a bending portion 2368, and a second connection end 2367 distributed in sequence, and the guide member 2363 has a weakened portion 2364. Before the current collecting member 2361 is bent, the guide member 2363 and the current collecting member 2361 cooperate so that the guide member 2363 and the current collecting member 2361 are connected or abut against each other, and the weakened portion 2364 corresponds in position to the bending portion 2368. Since the bending resistance strength of the weakened portion 2364 is less than the bending resistance strength of other regions of the guide member 2363, in the process of bending the current collecting member 2361, the guide member 2363 will bend at the weakened portion 2364. Since the weakened portion 2364 corresponds in position to the bending portion 2368, the guide member 2363 guides the current collecting member 2361 to bend at the position of the bending portion 2368, thereby effectively reducing the offset amount and tilt amount of the bending axis of the bending portion 2368 occurring during the bending process, thereby enabling the current collecting member 2361 to be smoothly installed into the shell of the battery cell, improving the structural stability of the current collecting member 2361, and improving the service life of the battery.

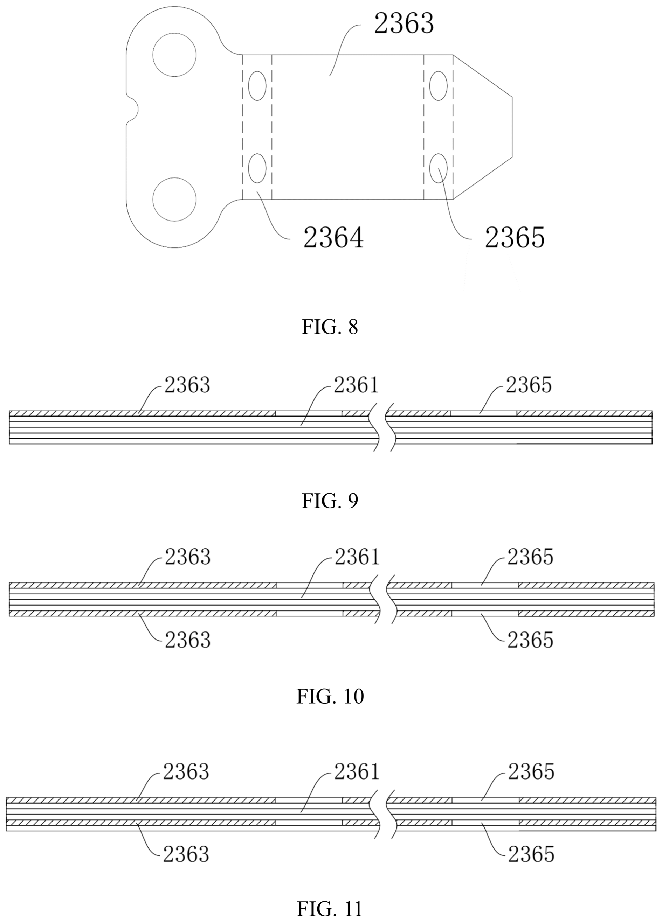

FIG. 9 is a side view of a current collecting structure 236 according to an embodiment of this application.

As shown in FIG. 9, in some embodiments of this application, the guide member 2363 is disposed on at least one side of the current collecting member 2361. Specifically, the current collecting member 2361 has one side at one end in a stacking direction, and the current collecting member 2361 also has the other side at the other end in the stacking direction. The guide member 2363 may be disposed only on the above one side of the current collecting member 2361, and in this case, the guide member 2363 can be used to guide the position of the crease generated during the bending process of the current collecting member 2361 from one side of the current collecting member 2361. The guide member 2363 may alternatively be disposed only on the above other side of the current collecting member 2361, and in this case, the guide member 2363 can be used to guide the position of the crease generated during the bending process of the current collecting member 2361 from the other side of the current collecting member 2361.

FIG. 10 is a side view of another current collecting structure 236 according to an embodiment of this application.

As shown in FIG. 10, at least two guide members 2363 may alternatively be provided, some of the guide members 2363 are disposed on the above one side of the current collecting member 2361, and the others of the guide members 2363 are disposed on the above other side of the current collecting member 2361. In this case, the guide member 2363 can be used to guide the position of the crease generated during the bending process of the current collecting member 2361 from both sides of the current collecting member 2361.

In summary, one guide member 2363 may be provided, and in this case, the guide member 2363 may be disposed on one side or the other side of the current collecting member 2361. Two or more guide members 2363 may alternatively be provided, and in this case, some guide members 2363 may be disposed on one side of the current collecting member 2361, and other guide members 2363 may be disposed on the other side of the current collecting member 2361. In the case where the guide member 2363 is disposed on one side of the current collecting member 2361, the guide member 2363 may be disposed on the side of the current collecting member 2361 that will form the inner side after bending. During the bending process of the current collecting member 2361, the guide member 2363 located on the inner side of the current collecting member 2361 will first undergo larger deformation, thereby better guiding the bending axis of the current collecting member 2361 to remain at the bending portion 2368. In the case where the guide member 2363 is disposed on both sides of the current collecting member 2361, the guide member 2363 can guide the position of the bending axis during the bending process of the current collecting member 2361 from both sides of the current collecting member 2361, thereby also better guiding the bending axis of the current collecting member 2361 to remain at the bending portion 2368.

In some embodiments of this application, the current collecting member 2361 includes at least two current collecting layers, where the at least two current collecting layers are stacked along a thickness direction of the current collecting member 2361, and at least one of the current collecting layers is provided with the guide member 2363.

The current collecting layer is a layered structure forming the current collecting member 2361, the current collecting layer may be a metal sheet, and the current collecting layer is used for current to pass through. Specifically, the material of the current collecting layer may include any one of gold, silver, copper, aluminum, and iron. To make the current collecting member 2361 have sufficient overcurrent area, the current collecting member 2361 needs to have sufficient cross-sectional area, which leads to excessive structural strength of the current collecting member 2361, thereby causing difficulty in bending the current collecting member 2361. Utilizing at least two current collecting layers to jointly form the current collecting member 2361 can reduce the structural strength of the entire current collecting member 2361 while ensuring the overcurrent area, thereby facilitating bending of the entire current collecting member 2361. The number of current collecting layers may be any number not less than two layers. For example, the number of current collecting layers may be any number from 2 layers to 50 layers, preferably, the number of current collecting layers may be any number from 5 layers to 15 layers, and specifically, the number of current collecting layers may be 7 layers, 8 layers, 9 layers, 10 layers, 11 layers, 12 layers, 13 layers, or the like.

At least one current collecting layer being provided with the guide member 2363 means that the guide member 2363 is connected to at least one current collecting layer. Specifically, one or at least two guide members 2363 may be provided. In the case where one guide member 2363 is provided, the guide member 2363 may be separately connected to the outermost current collecting layer, and in this case, only one current collecting layer is provided with the guide member 2363. Alternatively, the guide member 2363 may be connected to the middle current collecting layer, and in this case, the current collecting layers on both sides of the guide member 2363 are provided with the guide member 2363. In the case where at least two guide member 2363 are provided, the guide members 2363 may be respectively connected to multiple current collecting layers, and in this case, at least two current collecting layers are provided with the guide member 2363.

The current collecting member 2361 is formed by at least two current collecting layers, which can reduce the difficulty of bending the current collecting member 2361 while ensuring the overcurrent area, thereby facilitating bending of the current collecting member 2361. The guide member 2363 may be disposed on some of the current collecting layers, in other words, each of the some current collecting layers is provided with a guide member 2363. Alternatively, the guide member 2363 may be disposed on all of the current collecting layers, in other words, each of all the current collecting layers is provided with a guide member 2363. Utilizing the guide member 2363 enables the easily bendable current collecting member 2361 to always keep the bending axis at the bending portion 2368 during the bending process.

FIG. 11 is a side view of another current collecting structure 236 according to an embodiment of this application.

As shown in FIG. 11, in some embodiments of this application, the guide member 2363 is disposed between at least one pair of adjacent two current collecting layers.

In the case where one guide member 2363 is provided, the guide member 2363 may be disposed between a pair of adjacent two current collecting layers. In the case where at least two guide members 2363 are provided, one of the guide members 2363 may be disposed between a pair of adjacent two current collecting layers, and other guide members 2363 may be disposed at other positions. For example, some guide members 2363 may be disposed between two current collecting layers, and for another example, some guide members 2363 may be disposed on the outside of the outermost current collecting layer.

Disposing at least some of the guide members 2363 between adjacent two current collecting layers can make a spacing between the current collecting layer and the guide members 2363 smaller. This improves the guiding effect of the guide member 2363, thereby better utilizing the guide member 2363 to enable the current collecting member 2361 to always keep the bending axis at the bending portion 2368 during the bending process.

In some embodiments of this application, the current collecting member 2361 is a conductive structure, and the guide member 2363 is an insulating structure.

The current collecting member 2361 being a conductive structure means that in a direction of the current collecting member 2361 perpendicular to the crease, current can be transmitted from one end of the current collecting member 2361 to the other end of the current collecting member 2361. Specifically, the current collecting member 2361 may be entirely made of conductive materials such as gold, silver, copper, and aluminum, or may be partially made of conductive materials, with the remaining parts made of non-conductive materials, provided that in a direction perpendicular to the crease, current can be transmitted from one end of the current collecting member 2361 to the other end.

The guide member 2363 being an insulating structure means that in the direction of the guide member 2363 perpendicular to the crease, current cannot be transmitted from one end of the guide member 2363 to the other end of the guide member 2363. Specifically, the guide member 2363 may be entirely made of insulating materials, or may be partially made of insulating materials, with the remaining parts made of conductive materials, provided that in the direction perpendicular to the crease, current cannot be transmitted from one end of the current collecting member 2361 to the other end.

Since a weakened portion 2364 needs to be formed on the guide member 2363, in the case where the guide member 2363 is a conductive structure, an overcurrent area at the weakened portion 2364 is relatively small, and the resistance at the weakened portion 2364 is relatively large. This results in a high temperature at the weakened portion 2364 during operation, and even the weakened portion 2364 may thermally melt and break, causing high safety hazards. In the case where the guide member 2363 is an insulating structure, the above situation can be effectively avoided.

In some embodiments of this application, the material of the guide member 2363 includes at least one of polypropylene PP, polyethylene terephthalate PET, polyethylene PE, polyvinyl chloride PVC, polytetrafluoroethylene PTFE, ethylene-vinyl acetate copolymer EVA, and rubber.

The guide member 2363 made of the above materials not only has good insulation, but also has high toughness, and is unlikely to break during the bending process. This can ensure that the guide member 2363 can guide the position of the bending axis of the current collecting member 2361 throughout the bending process of the current collecting member 2361. Since the density of the above materials is low, the guide member 2363 made of the above materials can effectively reduce the weight of the entire structure.

In some embodiments of this application, the current collecting member 2361 and the guide member 2363 are both conductive structures.

In the direction perpendicular to the crease, current can be transmitted from one end of the current collecting member 2361 to the other end of the current collecting member 2361, and current can also be transmitted from one end of the guide member 2363 to the other end of the guide member 2363. Specifically, both the current collecting member 2361 and the guide member 2363 may be entirely made of conductive materials such as gold, silver, copper, and aluminum, or may be partially made of conductive materials, with the remaining parts made of non-conductive materials, provided that in the direction perpendicular to the crease, current can be transmitted from one end to the other end of the current collecting member 2361 and the guide member 2363.

In the case where a ratio of the cross-section of the weakened portion of the guide member 2363 to the cross-section of other regions of the guide member 2363 is high, making a difference between the two relatively small, the heat generation caused by current flowing through the weakened portion is relatively low, thereby ensuring safety while effectively increasing the overcurrent area of the entire current collecting structure 236. The guide member 2363 can be used to share the overcurrent pressure for the current collecting member 2361, improving the overcurrent capability of the entire current collecting structure 236.

In some embodiments of this application, the guide member 2363 is attached to the current collecting member 2361, and at least a portion of the guide member 2363 is bonded to the current collecting member 2361.

The guide member 2363 being attached to the current collecting member 2361 means that the surface of the guide member 2363 and the surface of the current collecting member 2361 are connected at all opposing positions of the two; or the surfaces of the two are connected at some opposing positions of the two, with small gaps at remaining opposing positions.

The guide member 2363 may be bonded to the current collecting member 2361 by applying glue. Specifically, the glue between the guide member 2363 and the current collecting member 2361 may be soft glue with lower structural strength, to prevent glue with excessive high structural strength from impeding bending of the current collecting member 2361.

In some embodiments of this application, at least a portion of the guide member 2363 is welded to the current collecting member 2361.

In the case where both the guide member 2363 and the current collecting member 2361 are metal materials, welding may be used to fixedly connect the two to achieve attachment. Certainly, with the progress of welding technology, when at least one of the guide member 2363 and the current collecting member 2361 is non-metal, provided that the two are weldable, welding may similarly serve for fixed connection.

Utilizing bonding or welding, a larger-area surface of the guide member 2363 can be fixedly connected to a side surface of the current collecting member 2361. In this case, the two are firmly connected, and during the bending process of the current collecting member 2361, the guide member 2363 is unlikely to slip relative to the current collecting member 2361. Therefore, the guide member 2363 is unlikely to guide the bending axis of the current collecting member 2361 outside the bending portion 2368.

In some embodiments of this application, the guide member 2363 abuts against the current collecting member 2361, at least a portion of the guide member 2363 and at least a portion of the current collecting member 2361 are both configured to abut against each other under the action of external force.

The guide member 2363 abutting against the current collecting member 2361 means that: in the case where the guide member 2363 and the current collecting member 2361 are not fixedly connected by bonding, welding, or the like, at least a portion of the guide member 2363 maintains attachment with at least a portion of the current collecting member 2361. Specifically, the guide member 2363 and the current collecting member 2361 may abut against each other under the action of external force. For example, the guide member 2363 may receive external force on a side away from the current collecting member 2361, so that the guide member 2363 can move toward the current collecting member 2361 or the guide member 2363 has a tendency to move toward the current collecting member 2361; and the current collecting member 2361 may receive external force on a side away from the guide member 2363, so that the current collecting member 2361 can move toward the guide member 2363 or the current collecting member 2361 has a tendency to move toward the guide member 2363. Under the action of the forces on the above two sides, the guide member 2363 and the current collecting member 2361 can abut against each other, the guide member 2363 and the current collecting member 2361 can keep their relative positions fixed under the action of friction force. In the case where a bending force is applied to the current collecting member 2361, the guide member 2363 can first bend at the weakened portion 2364, to guide the bending region of the current collecting member 2361.

In the case where the guide member 2363 and the current collecting member 2361 abut against each other, a larger-area surface of the guide member 2363 is attached to a side surface of the current collecting member 2361. This utilizes friction force to keep the positions of the two fixed, and during the bending process of the current collecting member 2361, the guide member 2363 is unlikely to slip relative to the current collecting member 2361. Therefore, the guide member 2363 is unlikely to guide the bending axis of the current collecting member 2361 outside the bending portion 2368.

FIG. 7 is a schematic structural diagram of a guide member 2363 according to an embodiment of this application.

As shown in FIG. 7, in some embodiments of this application, at least a portion of the weakened portion 2364 is a thinned region 2365. The thickness of at least a portion of the thinned region 2365 is less than the thickness of other portions of the weakened portion 2364 except the thinned region 2365, or at least a portion of the thinned region 2365 is a hollow structure.

The thinned region 2365 means that the thickness of a portion of the guide member 2363 is lower than the thickness of other regions of the guide member 2363. In the case where the thickness of the thinned region 2365 is as low as 0, the thinned region 2365 is the hole in the hollow structure.

By forming the thinned region 2365 in partial or entire region of the weakened portion 2364, the bending resistance strength of the weakened portion 2364 can be effectively reduced. Specifically, the thinned region 2365 may be a region with reduced thickness, or may be a hollow region. In both cases above, the bending resistance strength of the thinned region 2365 can be lower than the bending resistance strength of other regions of the guide member 2363.

FIG. 7 is a schematic structural diagram of a guide member 2363 according to an embodiment of this application.

As shown in FIG. 7, in some embodiments of this application, at least a portion of the thinned region 2365 is disposed at at least one end of the weakened portion 2364 in a first direction, the first direction intersecting with a connection direction of the first connection end 2366 and the second connection end 2367.

The thinned region 2365 may be all disposed at one end in the first direction; the thinned region 2365 may alternatively be partially disposed at one end in the first direction, and other portions all disposed at the other end in the first direction; the thinned region 2365 may alternatively be partially disposed at one end in the first direction, partially at the other end in the first direction, with the remaining portions disposed at other positions such as the middle in the first direction.

The current collecting member 2361 bends between the first connection end 2366 and the second connection end 2367, where the crease of the current collecting member 2361 intersects with a connection direction of the first connection end 2366 and the second connection end 2367, and the first direction in this application is roughly parallel to the crease. Specifically, an angle between the first direction and the crease is 0° to 15°. In this application, the first direction being completely parallel to the crease is taken as an example for explanation.

Disposing the thinned region 2365 at one end or both ends of the weakened portion 2364 in the first direction can facilitate processing and manufacturing. Specifically, when the thinned region 2365 is a region with reduced thickness, grinding and cutting can be used to directly process one end or both ends of the weakened portion 2364. Since the position to be processed is at the end, the operation space is large, facilitating processing. When the thinned region 2365 is a hole in the hollow region, grinding, cutting, and stamping can be used to directly process one end or both ends of the weakened portion 2364. Similarly, the position to be processed is at the end, the operation space is large, facilitating processing.

Moreover, in the case where the thinned region 2365 is disposed at both ends in the first direction, the thinned region 2365 can be used to limit the positions of both ends of the crease, thereby facilitating control of a deflection angle of the crease. Specifically, in the case where the thinned region 2365 is only located in a middle region of the crease, both ends of the crease are prone to tilt toward an outward direction from the weakened portion 2364. This causes an excessive deflection angle of the crease, resulting in only the middle portion of the crease remaining within the weakened portion 2364, while both ends of the crease being outside the weakened portion 2364. Specifically, one end of the crease may be located on one side of the weakened portion 2364, and the other end of the crease may be located on the other side of the weakened portion 2364 opposite to the one side. In the case where the thinned region 2365 is disposed at both ends in the first direction, the positions of both ends of the crease are determined within the weakened portion 2364, and the middle region of the crease is also necessarily within the weakened portion 2364, thereby effectively controlling the deflection angle of the crease, ensuring that the entire crease is within the weakened portion 2364.

FIG. 8 is a schematic structural diagram of another guide member 2363 according to an embodiment of this application.

As shown in FIG. 8, in some embodiments of this application, at least a portion of a thinned region 2365 may alternatively be disposed in the middle of a weakened portion 2364 in a first direction. The first direction intersects with a connection direction of a first connection end 2366 and a second connection end 2367.

Disposing the thinned region 2365 in the middle of the weakened portion 2364 in the first direction means that both ends of the thinned region 2365 in the first direction are at a distance from the edge of the weakened portion 2364 in the first direction, for example, the distance may be 1mm to 10mm.

The thinned region 2365 may be all located in the middle of the weakened portion 2364 in the first direction; alternatively, the thinned region 2365 may be partially located in the middle of the weakened portion 2364 in the first direction, with remaining portions all located at other positions such as the end of the weakened portion 2364 in the first direction.

Disposing the thinned region 2365 in the middle of the weakened portion 2364 in the first direction is conducive to making the weakened portion 2364 have smaller bending resistance strength, thereby facilitating easier bending and ensuring the crease remains within the weakened portion 2364. Specifically, compared to two ends of the weakened portion 2364 in the first direction, the middle of the weakened portion 2364 in the first direction possesses a greater area, and therefore the area of the thinned region 2365 can be larger, more effectively reducing and controlling the bending resistance strength of the weakened portion 2364.

In some embodiments of this application, the guide member 2363 is an integrally formed structure.

The weakened portion 2364 and other portions of the guide member 2363 may be formed by one-time manufacturing. For example, the guide member 2363 may be formed by cutting a portion from a larger plate structure; alternatively, the guide member 2363 may be formed by integral casting through a mold. For another example, a preform of the guide member 2363 may be formed by cutting a portion from a larger plate structure, followed by grinding, cutting, stamping, or the like to form the guide member 2363; alternatively, a preform of the guide member 2363 may be formed by integral casting through a mold, followed by grinding, cutting, stamping, or the like to form the guide member 2363.

The guide member 2363 being an integrally formed structure not only facilitates manufacturing, but also ensures the structural strength of the guide member 2363, making the guide member 2363 less prone to breakage during the bending process.

Finally, it should be noted that: the above embodiments are only used to illustrate the technical solutions of this application, not to limit them; although this application has been described in detail with reference to the foregoing embodiments, those of ordinary skill in the art should understand: they can still modify the technical solutions recorded in the foregoing embodiments, or make equivalent replacements for some or all of the technical features; and these modifications or replacements do not make the essence of the corresponding technical solutions depart from the scope of the technical solutions of the embodiments of this application, and they should all be covered within the scope of the claims and description of this application. In particular, as long as there is no structural conflict, the technical features mentioned in each embodiment can be combined in any way. This application is not limited to the specific embodiments disclosed herein, but includes all technical solutions falling within the scope of the claims.

## Claims

1. A current collecting structure, **characterized by** comprising:
a current collecting member, wherein the current collecting member comprises a first connection end, a second connection end, and a bending portion; and the bending portion connects the first connection end and the second connection end; and
a guide member, wherein the guide member is provided with a weakened portion, the bending resistance strength of the weakened portion is less than the bending resistance strength of other portions of the guide member except the weakened portion; the guide member cooperates with the current collecting member, the weakened portion corresponds in position to the bending portion, and the guide member is configured to guide the bending portion to bend at a position of the weakened portion.

2. The current collecting structure according to claim 1, **characterized in that**,
the guide member is disposed on at least one side of the current collecting member.

3. The current collecting structure according to claim 1 or 2, **characterized in that**,
the current collecting member comprises at least two current collecting layers, wherein at least two of the current collecting layers are stacked along a thickness direction of the current collecting member, and at least one of the current collecting layers is provided with the guide member.

4. The current collecting structure according to claim 3, **characterized in that**,
the guide member is disposed between at least one pair of adjacent two of the current collecting layers.

5. The current collecting structure according to any one of claims 1 to 4, **characterized in that**,
the current collecting member is a conductive structure, and the guide member is an insulating structure.

6. The current collecting structure according to claim 5, **characterized in that**,
the material of the guide member comprises at least one of polypropylene PP, polyethylene terephthalate PET, polyethylene PE, polyvinyl chloride PVC, polytetrafluoroethylene PTFE, ethylene-vinyl acetate copolymer EVA, and rubber.

7. The current collecting structure according to any one of claims 1 to 4, **characterized in that**,
the current collecting member and the guide member are both conductive structures.

8. The current collecting structure according to any one of claims 1 to 7, **characterized in that**,
the guide member is attached to the current collecting member; wherein at least a portion of the guide member is bonded to the current collecting member, and/or at least a portion of the guide member is welded to the current collecting member.

9. The current collecting structure according to any one of claims 1 to 8, **characterized in that**,
the guide member abuts against the current collecting member; wherein at least a portion of the guide member and at least a portion of the current collecting member are both configured to abut against each other under the action of external force.

10. The current collecting structure according to any one of claims 1 to 9, **characterized in that**,
at least a portion of the weakened portion is a thinned region; and
the thickness of at least a portion of the thinned region is less than the thickness of other portions of the weakened portion except the thinned region, or at least a portion of the thinned region is a hollow structure.

11. The current collecting structure according to claim 10, **characterized in that**,
at least a portion of the thinned region is disposed at at least one end of the weakened portion in a first direction, the first direction intersecting with a connection direction of the first connection end and the second connection end.

12. The current collecting structure according to claim 10, **characterized in that**,
at least a portion of the thinned region is disposed in the middle of the weakened portion in a first direction, the first direction intersecting with a connection direction of the first connection end and the second connection end.

13. The current collecting structure according to any one of claims 1 to 12, **characterized in that**,
the guide member is an integrally formed structure.

14. A battery cell, **characterized by** comprising:
an electrode terminal;
an electrode assembly; and
the current collecting structure according to any one of claims 1 to 13, wherein one end of the current collecting structure is connected to the electrode terminal, the other end of the current collecting structure is connected to the electrode assembly.

15. The battery cell according to claim 14, **characterized in that**,
the battery cell is a cylindrical battery or a prismatic battery.

16. A battery, **characterized by** comprising:
the battery cell according to claim 14 or 15.

17. An electric device, **characterized by** comprising:
the battery according to claim 16.
